# EUROPEAN PATENT APPLICATION

(11) **EP 4 672 204 A1**
(43) Date of publication of application: **31.12.2025**
(21) Application number: 25164151.0
(22) Date of filing: 17.03.2025
(51) Int. Cl.: G09B 19/06, G09B 5/06

(54) **SYSTEM FOR ASSISTING A USER TO LEARN FOREIGN LANGUAGES AND METHOD OF DOING THE SAME**

(30) Priority: 28.06.2024 JP 2024104553
(71) Applicant: Cognitive Research Labs, Inc., Tokyo 1060032 (JP)
(72) Inventor: TOMABECHI, Hideto, Tokyo, 1060032 (JP)
(74) Representative: Winter, Brandl - Partnerschaft mbB

(57) **Abstract**

A system (100) for assisting a user to learn foreign languages includes a first device (145) for taking a picture of the user pronouncing in accordance with audio of a moving picture, a first memory (132D) storing therein exemplary non-verbal communication skills to be demonstrated by a speaker during conversation, a second memory (132F) storing therein a trained evaluation model for evaluating non-verbal communication skills of a speaker during conversation, a second device (131D) for comparing the exemplary non-verbal communication skills stored in the first memory (132D) to non-verbal communication skills of the user having been acquired by the first device (145), by means of the trained evaluation model (210B) stored in the second memory (132E), to thereby evaluate non-verbal communication skills of the user, and a third device (131E, 142) for displaying evaluation made by the second device (131D).

## Description

### BACKGROUND OF THE INVENTION

### FIELD OF THE INVENTION

The invention relates to a system for assisting a user to learn foreign languages, a method of doing the same, and a recording medium readable by a computer, storing a program therein for causing a computer to carry out the method.

### DESCRIPTION OF THE RELATED ART

Shadowing is one of methods of learning foreign languages. Shadowing is known as one of simultaneous interpretation training, and includes steps of listening to a foreign language (for instance, French), and pronouncing words a user has heard. Differently from "repeating" in which a user listens to a foreign language and repeats words after the user finished hearing the foreign language, a user needs to pronounce words immediately after the user has heard the words of a foreign language. This is named "shadowing" because a user immediately chases words of a foreign language like shadow.

For instance, Japanese Patent No. 5756555 suggests an example of an apparatus for carrying out shadowing.

The suggested shadowing apparatus is designed to record voices of a user during shadowing, and make objective evaluation to the recorded voices. The suggested apparatus is said to assist a user who alone learns a foreign language, and reduce education steps of a teacher.

### SUMMARY OF THE INVENTION

It is a final object of learning a foreign language is not only to acquire an ability of listening to and speaking a foreign language, but also to make effective communication with a foreign person through words. It is generally said that non-verbal elements (non-verbal communication skills) occupies a larger proportion in conversation than words.

Herein, non-verbal elements indicate means of expression other than words, for instance, body action such as body gesture and hand gesture. These non-verbal elements complement and emphasize verbal messages, and further, assists to understand emotion and intention of a person to whom you talk to.

In addition, non-verbal elements are important for avoiding a person to whom you talk to from misunderstanding you. This is because a person to whom you talk may wrongly interpret your words by your countenance and/or gesture even through the same words.

As mentioned above, it is important to acquire non-verbal communication skills as well as verbal skill in order to make effective communication. Though there is no global language, non-verbal communication skills are global (for instance, this is the reason why the silent films of Chaplin were globally accepted).

However, the above-mentioned conventional shadowing apparatus has an object to improve only verbal skill, and is indifferent in improvement of non-verbal communication skills.

In view of the problem accompanied with the above-mentioned conventional shadowing apparatus, it is an exemplary object of the present invention to provide a system for assisting a user to learn foreign languages, a method of doing the same, and a recording medium storing a program therein for causing a computer to carry out the method, all of which are capable of improving non-verbal communication skills in learning foreign languages, regardless of how a user learns foreign languages.

In a first exemplary aspect of the present invention, there is provided a system (100) for assisting a user to learn foreign languages, characterized by a first device (145) for taking a picture of the user pronouncing in accordance with audio of a moving picture, a first memory (132D) storing therein exemplary non-verbal communication skills to be demonstrated by a speaker during conversation, a second memory (132F) storing therein a trained evaluation model for evaluating non-verbal communication skills of a speaker during conversation, a second device (131D) for comparing the exemplary non-verbal communication skills stored in the first memory (132D) to non-verbal communication skills of the user having been acquired by the first device (145), by means of the trained evaluation model (210B) stored in the second memory (132E), to thereby evaluate non-verbal communication skills of the user, and a third device (131E, 142) for displaying evaluation made by the second device (131D).

It is preferable that the second device (131D) evaluates non-verbal communication skills of the user with respect to at least one items selected among countenance, gaze, gesture, body action, proxemics, physical appearance, visual focus, auditory information and cultural background.

It is preferable that the second device (131D) extracts a feature degree indicating quantitatively a feature of each of the items, based on image data of the user having been acquired by the first device (145), and compares the thus extracted feature degree to the exemplary non-verbal communication skills stored in the first memory (132D).

It is preferable that the second device (131D) auxiliary uses conversation of the user as verbal data in evaluation of the non-verbal communication skills of the user.

The system (500) may further include a first database storing therein cultural background data of various countries and regions, and a fourth device for reading cultural background data of the user out of the first database, and taking the cultural background data of the user into consideration in evaluation of non-verbal communication skills of the user to be carried out by the second device (131D).

It is preferable that the trained evaluation model (210B) is made by machine learning so as to evaluate non-verbal communication skills of a speaker with the exemplary non-verbal communication skills stored in the first memory (132D) being used as criteria, an input (220) to the trained evaluation model (210B) includes image data of non-verbal communication skills of the user during conversation, the image data being taken by the first device (145), and an output (230) from the trained evaluation model (210B) is evaluation to the non-verbal communication skills of the user during conversation, the evaluation being made based on the exemplary non-verbal communication skills.

The system (500) may further include a fifth device for making curriculum specialized for the user so as to compensate for the non-verbal communication skills of the user having been low-evaluated by the second device (131D).

The system (500) may further include a sixth device for making learning materials in line with the curriculum made by the fifth device.

It is preferable that the learning materials include a moving picture in which characters (310) and the user (320) make conversation with each other.

The system (500) may further include a seventh device for displaying a subtitle (330) in the moving picture, wherein the seventh device, when non-verbal communication skills of the user having been low-evaluated by the second device (131D) appears in the conversation, displays at least a first subtitle among first and second subtitles, the first subtitle expressing low evaluation of the non-verbal communication skills of the user and a subtitle, the second subtitle including advice to the low-evaluated non-verbal communication skills of the user.

The system (500) may further include an eighth device for turning the subtitle into audio, wherein the eighth device plays the audio in the moving picture in place of or together with the subtitle (330).

In a second exemplary aspect of the present invention, there is provided a portable wireless communication device (100) including the above-mentioned system (500).

In a third exemplary aspect of the present invention, there is provided a method of assisting a user to learn foreign languages, characterized by the seps of taking a picture (S140) of the user pronouncing in accordance with audio of a moving picture, comparing exemplary non-verbal communication skills to non-verbal communication skills (S210) of the user having been acquired in the picture-taking step (S140), by means of a trained evaluation model (210B) used for evaluating non-verbal communication skills of a speaker in conversation, to thereby evaluate the non-verbal communication skills of the user, the exemplary non-verbal communication skills being read out of a memory (132D) storing therein exemplary non-verbal communication skills including exemplary countenance, gesture and so on to be demonstrated by a speaker in conversation, and displaying evaluation (S220) made in the comparison step (S210).

In a fourth exemplary aspect of the present invention, there is provided a computer program adapted to perform the steps of the above-mentioned method, when the program is run on a computer.

In a fifth exemplary aspect of the present invention, there is provided a portable wireless communication device (100) including a program for causing the portable wireless communication device (100) to carry out the above-mentioned method.

### ADVANTAGES OBTAINED BY THE INVENTION

In order to make effective communication with others, non-verbal communication skills such as countenance, body gesture and hand gesture is important as well as verbal skill. However, conventional systems (apparatuses, learning materials and schools all for learning foreign languages) were indifferent to non-verbal communication skills.

The system in accordance with the present invention makes it possible for a user to improve non-verbal communication skills. Specifically, a user can learn exemplary non-verbal communication skills by himself/herself, ensuring improvement in communication skills of a user.

### BRIEF DESCRIPTION OF THE DRAWINGS

FIG. 1 is a block diagram illustrating an example of a structure of a portable wireless communication device including therein a system for assisting to learn foreign languages in accordance with the first exemplary embodiment of the present invention.
FIG. 2 is a conceptual diagram illustrating a structure of a third program stored in an external memory.
FIG. 3 is a conceptual diagram illustrating a function of a third program stored in an external memory.
FIG. 4 is a flowchart showing an operation of the system illustrated in FIG. 1.
FIG. 5 is a conceptual diagram of a system for assisting to learn foreign languages in accordance with the fifth exemplary embodiment of the present invention.

### DESCRIPTION OF THE EXEMPLARY EMBODIMENTS

Exemplary embodiments in accordance with the present invention will be explained hereinbelow with reference to drawings.

### (First Exemplary Embodiment)

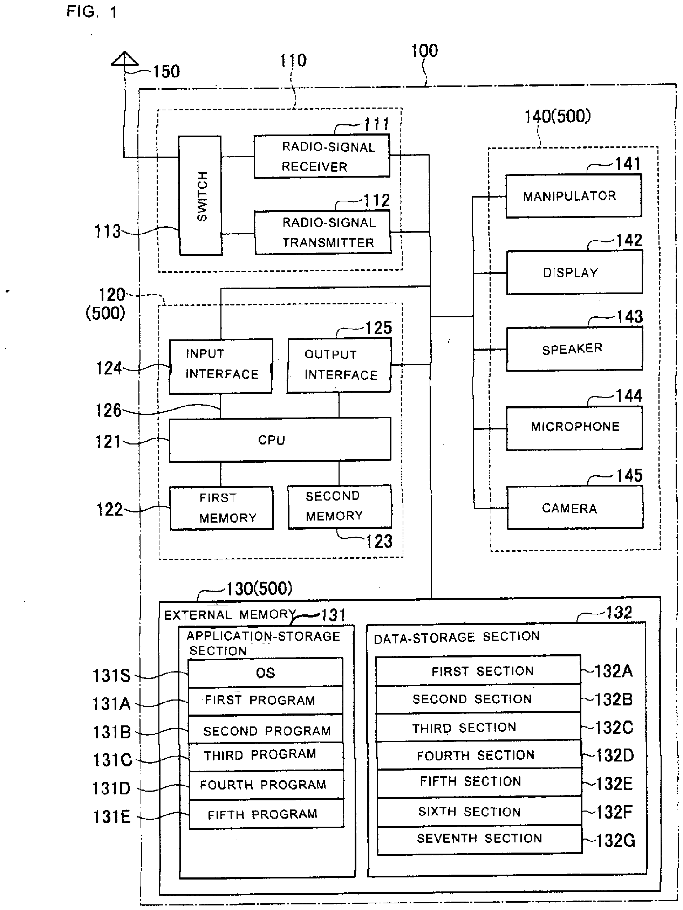

FIG. 1 is a block diagram illustrating an example of a structure of a portable wireless communication device 100 including therein a system 500 for assisting a user to learn foreign languages in accordance with the first exemplary embodiment of the present invention.

The portable wireless communication device 100 is designed to include a communication unit 110, a control unit 120, an external memory (a hard disc) 130, an input-output (IO) unit 140, and an antenna 150, in which the control unit 120, the external memory 130 and the IO unit 140 define the system 500.

The portable wireless communication device 100 is configured, for instance, as a portable telephone device such as a cellular phone.

The communication unit 110 is connected to the antenna 150, and transmits data to and receives data from other wireless communication devices in radio-signal communication.

The communication unit 110 includes a radio-signal receiver 111, a radio-signal transmitter 112, and switch 113.

The radio-signal receiver 111 demodulates data received from other wireless communication devices, and then, transmits the demodulated data to the control unit 120. The radio-signal transmitter 112 modulates data output from the control unit 120, and then, transmits the modulated data to other wireless communication devices through the antenna 150. The switch 113 receives a control signal output from the control unit 120, and exchanges a transmission mode to a receipt mode and vice versa in accordance with the received control signal.

The control unit 120 is comprised of a central processing unit (CPU) 121, a first memory 122 comprised of a read only memory (ROM), a second memory 123 comprised of a random access memory (RAM), an input interface 124 through which commands and/or data having been input into the control unit 120 are transmitted to the central processing unit 121, an output interface 125 through which results of steps having been executed by the central processing unit 121 are output, and buses 126 through which the central processing unit 121 is electrically connected with the first memory 122, the second memory 123, the input interface 124, and the output interface 125.

The first memory 122 stores therein both control programs to be executed by the central processing unit 121 and unrewritable data.

The second memory 123 stores therein various data and parameters, and presents a working area to the central processing unit 121. That is, data and/or programs temporarily necessary for the central processing unit 121 to execute control programs is(are) read out of the external memory 130, and temporarily stored in the second memory 123.

The central processing unit 121 entirely controls an operation of the portable wireless communication device 100 in cooperation with OS (Operating System). Specifically, the central processing unit 121 reads programs necessary for operating the portable wireless communication device 100 out of the external memory 130, and executes the programs. Thus, the central processing unit 121 works in accordance with the programs stored in the external memory 130. As mentioned later, the central processing unit 121 makes outputs in response to inputs by means of a trained evaluation model.

The IO unit 140 includes a manipulation device 141, a display 142, a speaker 143, a microphone 144, and a camera 145 as a device for taking pictures.

The manipulation unit 141 is comprised of a ten-key pad, for instance. Various data is input into the control unit 120 through the manipulation unit 141.

The display 142 is comprised of a liquid crystal display (LCD), for instance. The display 142 displays computation results carried out by the control unit 120, and various data.

Audio data (synthesized voices) having been synthesized by the control unit 120 is output through the speaker 143.

Audio data having been collected by the microphone 144 and image data having been taken by the camera 145 are transmitted to the control unit 120.

The external memory (hard disc) 130 is comprised of an application-storage section 131 and a data-storage section 132.

The data-storage section 132 includes a first section 132A storing therein various moving pictures having been collected so far, a second section 132B recording voices and sounds in a moving picture selected by a user, as audio data, a third section 132C recording voices of a user having pronounced following voices of a moving picture, as audio data, a fourth section 132D storing therein both data about exemplary verbal skill (accurate pronunciation, accurate accents, exemplary fluency, and so on), exemplary non-verbal communication skills to be demonstrated by a speaker in conversation, a fifth section 132E storing therein a first trained evaluation model for evaluating verbal skills of a user, and a second trained evaluation model for evaluating non-verbal communication skills having been demonstrated by a user during conversation, a sixth section 132F recording pictures of a user (specifically, non-verbal communication skills of a user) having been taken by the camera as image data, and a seventh section 132G storing therein various data other than the above-mentioned data.

In this specification "non-verbal communication skills" of a speaker includes at least following elements.
(A) countenance (including a change of emotions and a small change in countenance, for instance)
(B) gaze (including a direction of a gaze and a period of time during which a gaze is kept, for instance)
(C) gesture (including hand gesture and arm gesture, for instance)
(D) body language (including posture and body orientation, for instance)
(E) proxemics (including a distance between persons and an angle defined by persons, for instance)
(F) physical appearance (including clothing, hairstyle, and accessories, for instance)

The application-storage section 131 stores therein OS (Operating System) 131S for controlling entire operation of the portable wireless communication device 100, a first program 131A, a second program 131B, a third program 131C, and a fourth program 131D, and a fifth program 131E.

The first program 131A configures an audio recorder for recording audio/voices of a moving picture selected by a user among moving pictures stored in the first section 132A, into the second section 132B.

The second program 131B configures a user-voice recorder for recording voices pronounced by a user in accordance with a moving picture selected by a user, into the third section 132C, and further configures an image-data recorder for recording non-verbal communication skills of a user taken by the camera 145, into the sixth section 132F.

The third program 131C compares exemplary verbal skill stored in the fourth section 132D with voice data of a user stored in the third section 132C by means of the trained first evaluation model stored in the fifth section 132E to thereby evaluate the verbal skills of a user and make evaluation results.

The fourth program 131D compares exemplary non-verbal communication skills stored in the fourth section 132D with non-verbal communication skills of a user found in image data (that is, image data including non-verbal communication skills of a user taken by the camera 145) having been transmitted from the control unit 120 to thereby evaluate non-verbal communication skills of a user demonstrated during a conversation, and make evaluation results.

Specifically, the fourth program 131D makes evaluation to non-verbal communication skills of user during shadowing (or during conversation, during reading aloud).

The fifth program 131E displays the evaluation results in the display 142, the evaluation results having been made by the third program 131C and the fourth program 131D. The fifth program 131E and the display 142 cooperate with each other to configure a display unit.

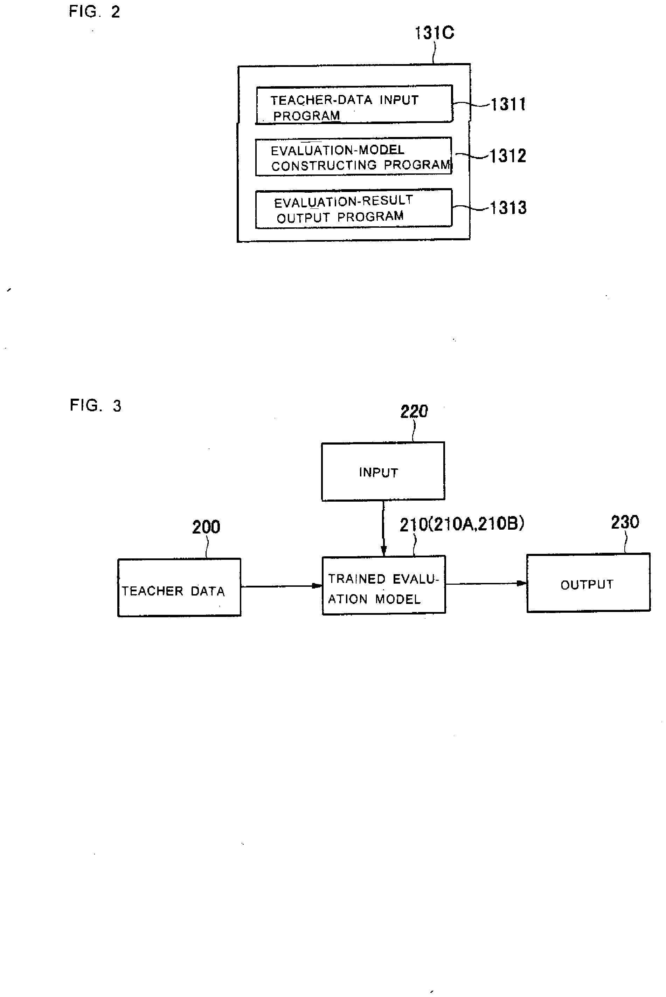

FIG. 2 is a conceptual diagram illustrating a structure of the third program 131C.

As illustrated in FIG. 2, the third program 131C is comprised of a teacher-data input program 1311, an evaluation-model constructing program 1312, and an evaluation-result output program 1313.

The teacher-data input program 1311 inputs teacher-data into the control unit 120 for making an evaluation model by machine learning.

The evaluation-model constructing program 1312 uses teacher data having been input through the teacher-data input program 1311 to thereby make evaluation models by machine learning, and outputs the thus made trained evaluation models to the central processing unit 121.

The evaluation-result output program 1313 outputs evaluation results having been made through the trained evaluation models constructed by the evaluation-model constructing program 1312.

The fourth program 131D has the same function as those of the third program 131C.

FIG. 3 is a conceptual diagram showing functions of the third program 131C.

As illustrated in FIG. 3, teacher data 200 is input into the evaluation-model constructing program 1312 by the teacher-data input program 1311, and the evaluation-model constructing program 1312 makes an evaluation model 210 based on the teacher data 200.

The evaluation model 210 continuously carries out machine learning through the use of later-input teacher data 200, and turns into a trained evaluation model 210.

The evaluation model 210 includes a first evaluation model 210A and a second evaluation model 210B.

The first evaluation model 210A is configured through machine learning to evaluate whether verbal skills of a user is good, based on exemplary verbal skills (accurate pronunciation, accurate accent, exemplary fluency, abundant vocabular, and so on) stored in the fourth section 132D.

User's voices pronounced in a conversation is input as audio data (input data 220) into the trained first evaluation model 210A.

The trained first evaluation model 210A makes predetermined computation to thereby make an output 230 including evaluation about whether verbal skills of a user is appropriate, based on exemplary verbal skills.

The evaluation (output 230) made by the trained first evaluation model 210A is transmitted to the control unit 120 through the evaluation-result output program 1313, and then, displayed in the display 142 by the fifth program 131E.

The second evaluation model 210B is configured through machine learning to evaluate whether nonverbal communication skills of a user is good, based on exemplary non-verbal communication skills stored in the fourth section 132D.

Image data of non-verbal communication skills of a user during a conversation, taken by the camera 145, is introduced as input 220 into the trained second evaluation model 210B.

The trained second evaluation model 210B makes predetermined computation to thereby make an output 230 including evaluation about whether non-verbal communication skills of a user is appropriate, based on non-verbal communication skills generally considered exemplary.

The evaluation (output 230) made by the trained second evaluation model 210B is transmitted to the control unit 120 through the evaluation-result output program 1313, and then, displayed in the display 142 by the fifth program 131E.

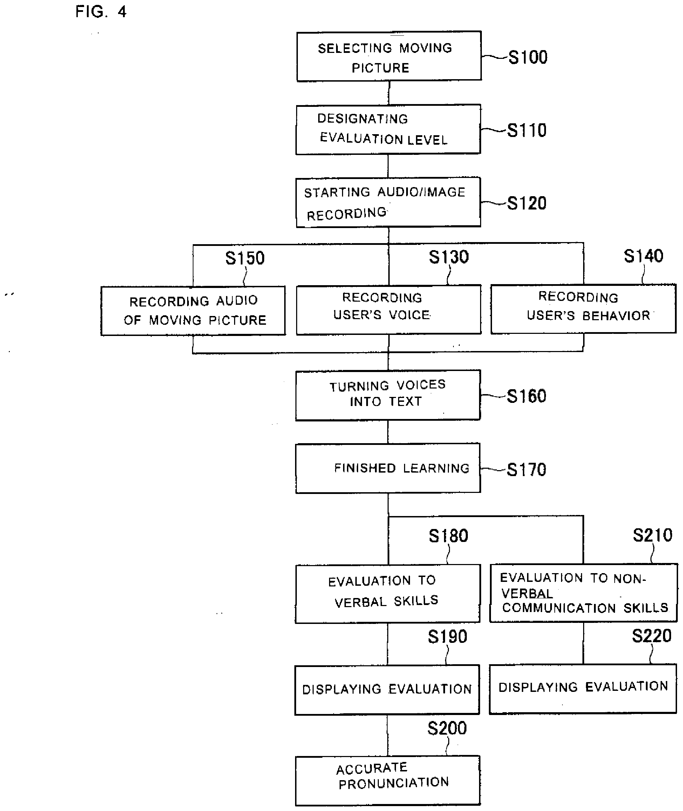

FIG. 4 is a flowchart showing an operation of the portable wireless communication device 100. Hereinbelow is explained the operation of the portable wireless communication device 100 with reference to FIG. 4.

At first, a user selects a moving picture for learning (for instance, shadowing) among a lot of moving pictures stored in the first section 132A in step S100.

The first section 132A stores therein various moving pictures. Those moving pictures may be grouped into genres (a business scene, a shopping scene and a scene in an airplane, and so on), languages (rarely used minor languages as well as major languages such as English and French), regions (for instance, the same English word is pronounced differently in England, USA and Australia), and a length of time (a few minutes to an hour over), for instance. A user may select a moving picture in accordance with his/her need.

Then, a user, before starting learning, designates an evaluation level applied to both hie/her verbal skills and non-verbal communication skills in step S110.

For instance, the evaluation level includes several stages ranging from "generous evaluation" to "strict evaluation". A user can designate an evaluation level in accordance with his/her progress of learning.

Then, a user starts a recorder (not illustrated) and the camera 145 for recording audio/voice and images in step S120.

Then, a user starts learning a foreign language. Specifically, voices of the moving picture having been selected by the user are played through the speaker 143, and the user mimics the voices in pronunciation immediately after the voices or after a predetermined section. Voices of the user are collected through the microphone 144 to thereby be recorded in the third section 132C of the data-storage section 132 through the second program 131B in step S130.

While voices of the user is being recorded, non-verbal communication skills of the user during learning are taken by the camera 145 in step S140, and then, are recorded in the sixth section 132F through the second program 131B.

Both audio (voices) data including recorded voices of the user and image data including non-verbal communication skills of the user taken by the camera 145 are transmitted to the control unit 120.

Simultaneously with recording the user's voices and taking a picture of non-verbal communication skills of the user, audio (voices) of the selected moving picture is recorded in the second section 132B through the first program 131A in step S150.

Voices of the user having been recorded in the third section 132C are turned into letters (a text) by means of a program (not illustrated) having a function of recognizing voices, in step S160.

When the user finished learning in step S170, the central processing unit 121 starts the third program 131C, and compares exemplary verbal skills stored in the fourth section 132D with actual voices of the user stored in the third section 132C, based on the trained first evaluation model stored in the fifth section 132E, to thereby make evaluation to voices (verbal skills) of the user in step S180.

The evaluation includes at least following points.

### (A) evaluation to pronunciation

Specifically, clarity in pronunciation, accuracy, pronunciation of syllables, difference between vowels and consonants, accents, and so on are evaluated.

### (B) evaluation to intonation

Specifically, intonation in sentences and phrases, change of a pitch, rhythm, strength, expression of emotions, and so on are evaluated.

### (C) evaluation to fluency

Specifically, fluency, naturalness, consistency, pace and smoothness in conversation are evaluated, for instance.

### (D) indication of mistakes

Specifically, whether slip of the tongue, pronunciation mistake, grammatical error, and mistake in vocabulary selection are found is checked, for instance.

Then, the central processing unit 121 displays the above-mentioned evaluation in the display 142 in step S190.

Table 1 shows an example of the evaluation to be displayed in the display 142. The evaluation includes a score and a short message in each of evaluation points.

**(Table 1)**

| Evaluation point | Score | Message |
|---|---|---|
| pronunciation | 7/10 | ◆ Sound of "t" in "literature" and "culture" is often heard weakly. |
| | | ◆ Sound of "z" in "organized" is heard "s". You should be careful. |
| Intonation | 7/10 | ◆ Sound of ending in sentences and phrases is likely to get louder, which may give impression of lack of confidence. |
| | | ◆ Your English is more natural and more expressive, if more inflected. |
| Fluency | 7/10 | ◆ You can speak fluently, but sometimes are at a loss of words, or rephrasing. |
| | | ◆ You can speak more smoothly by effectively using pauses. |

For instance, mistakes in pronunciation can be displayed in the display 142 not only after learning, but also during learning, in which case, attention of the user may be called by highlighting mistakes with colors or emphasizing mistakes with an icon.

Then, accurate pronunciation is output against wrong pronunciation, if the user wants to do so in step S200.

Specifically, the central processing unit 121 starts a program (not illustrated) for synthesizing voices to thereby synthesize accurate pronunciation of words which the user wrongly pronounced. The thus synthesized accurate pronunciation is output through the speaker 143.

In addition to the above-mentioned evaluation to verbal skills of the user, the system 500 in accordance with the first exemplary embodiment further evaluates non-verbal communication skills of the user shown in a conversation.

The camera 145 starts taking a moving picture of a user (specifically, non-verbal communication skills of a user) simultaneously with a start of learning of a user. The thus taken image data is stored in the sixth section 132F through the second program 131B.

When a user finished learning in step S170, the central processing unit 121 starts the fourth program 131D. Thus, the exemplary non-verbal communication skills stored in the fourth section 132D is compared through the trained second evaluation model stored in the fifth section 132E with the non-verbal communication skills of a user having been taken by the camera 145 and having been transmitted to the control unit 120 in step S210.

The central processing unit 121 makes evaluation to the non-verbal communication skills of a user shown in a conversation.

Table 2 is an example of evaluation (scores and messages) to countenance and body gesture of a user among non-verbal communication skills.

**(Table 2)**

| Evaluation point | Score | Message |
|---|---|---|
| Countenance | 6/10 | Facial expression was rather stiff, and hence, an impression that emotional expression lacks is made. |
| Body gesture | 6/10 | Almost no gestures were not found. |

After the central processing unit 121 has made evaluation (Table 2), the central processing unit 121 displays both the evaluation to the non-verbal communication skills and the evaluation (Table 1) to the verbal skills in the display 142 in step S220.

The evaluation to non-verbal communication skills is explained hereinbelow in detail.

The evaluation to the above-mentioned points (A) to (F) is made by extracting a feature degree of non-verbal communication skills of a user out of the image data taken by the camera 145, and comparing the thus extracted feature degree with the exemplary non-verbal communication skills stored in the fourth section 132D through the trained second evaluation model stored in the fifth section 132E.

Herein, a feature degree means a quantified feature of each of non-verbal communication skills to be used for quantitively evaluate each of non-verbal communication skills. The fourth program 131D (an evaluation device) compares a feature degree with exemplary non-verbal communication skills stored in the fourth section 132D.

A feature degree of each of non-verbal communication skills is used as teacher data (see FIG. 3) to be input into the trained evaluation model 210 (this is detailed later).

### (A) Countenance (Facial expression)

Countenance is a major non-verbal communication skill indicating emotion, intention, attitude, and so on. The system 500 extracts a feature degree out of the image data having been taken by the camera 145 to capture various countenances. The system 500 particularly extracts a smile which is major among countenances.
(1A) Smile
(1A-1) Regarding a degree of lifting corners of a mouth, an angle of mouth corners, a lifting distance, and left-right symmetry are extracted as a feature degree.
(1A-2) Regarding an opening of a mouth, a mouth-opening degree, a mouth-opening area, and a mouth-opening speed are extracted as a feature degree.
(1A-3) With respect to how teeth are exposed, how degree are upper teeth, upper and lower teeth or gum are exposed is extracted as a feature degree.
(1A-4) With respect to cheek swelling, shrinkage strength of buccinator, a height of cheek, and left-right symmetry are extracted as a feature degree.
(1A-5) With respect to wrinkles at corners of eyes, a number, a depth, a length and left-right symmetry of wrinkles are extracted as a feature degree.
(1B) Movement of eyebrow
   Since movement of eyebrow plays an important part in expression of emotion or attitude, a feature degree mentioned below is extracted out of the image data having been taken by the camera 145.
(1B-1) As up/down movement of eyebrows, a height, a range of up/down movement and left-right symmetry of eyebrows are extracted.
(1B-2) As wrinkles of eyebrows, a shrinkage strength of corrugator supercilii, a distance between eyebrows, and a depth of wrinkles are extracted.
(1B-3) As inclination of eyebrows, an inclination angle and left-right symmetry of mount bizan are extracted.
(1C) Opening degree of eyes
   An opening degree of eyes indicate a degree of surprise or interest. Feature degrees identified below are extracted out of image data having been taken by the camera 145.
(1C-1) As a distance between upper and lower eyelids, a vertical length of palpebral fissure and an eye-opening rate are extracted.
(1C-2) As an opening degree of eyes, an exposed area of iris and an exposed area of sclera are extracted.
(1D) Blink
   Blink indicates tension or concentration. Feature degrees mentioned below are extracted out of image data having been taken by the camera 145.
(1D-1) As a frequency of blinks, a number of blinks per a unit of time is extracted.
(1D-2) As a period of time in which blink is kept, an average period of time in which a blink is kept is extracted.
(1D-3) As a timing of a blink in left or right eye, a time difference between blinks in left and right eyes, and asymmetry between blinks in left and right eyes are extracted.
(1E) Lip movement
   Lip movement is deeply concerned with speech and emotional expression. Feature degrees mentioned below are extracted out of image data having been taken by the camera 145.
(1E-1) As an opening/closing degree of a mouth, an opening width, an opening area and an opening speed are extracted.
(1E-2) As prominence of lip, a prominence distance of each of upper and lower lips, and left-right symmetry are extracted.
(1E-3) As a pull degree in corners of a mouth, a displacement in a left or right direction in corners of a mouth, and a curvature of corners of a mouth are extracted.
(1E-4) As a tension degree of lip, a shrinkage degree of muscles around corners of a mouth (for instance, orbicularis oris, levator anguli oris, and depressor anguli oris) is extracted.
(1F) Nose movement
   Nose movement indicates emotion such as antipathy and anger. Feature degrees mentioned below are extracted out of image data having been taken by the camera 145.
(1F-1) As a spread of nose wings, a width, an area and left-right symmetry of nose wings are extracted.
(1F-2) As winkles of a nose, a shrinkage strength of procerus, and a depth of a wrinkle in an upper portion of a nose are extracted.
(1G) Cheek movement
   Cheek movement indicates a change in expression and emotion. Feature degrees mentioned below are extracted out of image data having been taken by the camera 145.
(1G-1) As a bulge of cheek, a shrinkage strength of buccinator, a height of a raise in cheek, and left-right symmetry are extracted.
(1G-2) As a tension of cheek, a tension degree of buccinator, and a hardness of a skin are extracted.
(1H) Jaw movement
   Jaw movement indicates confidence or tension. Feature degrees mentioned below are extracted out of image data having been taken by the camera 145.
(1H-1) As a bulge of jaw, a horizontally moving distance of a chin, and an angle of temporomandibular joint are extracted.
(1H-2) As a pull of jaw, a tension degree of a muscle located below jaw, and a hardness of a skin are extracted.
(2) Gaze
   Gaze is important non-verbal data indicating an interest, an attention or a thought process in communication. Feature degrees relating to gaze are extracted out of image data having been taken by the camera 145.
(2A) Eye contact
   Eye contact is used to evaluate an interest to others or an attention to others. Feature degrees mentioned below are extracted out of image data having been taken by the camera 145.
(2A-1) As a frequency of eye contacts, a number of eye contacts per a unit of time is extracted out of image data having been taken by the camera 145.
(2A-2) As a period of time in which eye contact continues, an average period of time for a single eye contact is extracted out of image data having been taken by the camera 145.
(2A-3) As a kind of eye contact, keeping an eye on a face of a person with whom a person talks, keeping an on a particular portion (for instance, an eye, a mouth, and a nose), and gaze avoidance are extracted out of image data having been taken by the camera 145.
(2B) Direction of gaze
   A direction of gaze or which direction a user is looking at is extracted out of image data having been taken by the camera 145.
(2B-1) As a horizontal direction of gaze, an angle of left-right eyeballs is measured as a distance from a center of a face.
(2B-2) As a vertical direction of gaze, an angle of upper-lower eyeballs is measured as a distance from a center of a face.
(2C) Period of time of gazing
   Stability and concentration in gaze are extracted out of image data having been taken by the camera 145.
(2C-1) A period of time in which a user keeps an eye on a predetermined point is extracted.
(2C-2) A speed at which a gaze moves per a unit of time is extracted to quantify gaze movement.
(2D) Pupil diameter
   A size of pupil is related to a degree of emotion or interest. A size of pupil is extracted out of image data having been taken by the camera 145.
(2D-1) A diameter of pupil is extracted out of image data having been taken by the camera 145.
(2D-2) As contraction and expansion of pupil, how a pupil diameter varies and how a speed at which a pupil diameter varies increases/decreases when lighting condition or emotion changes are extracted.
(2E) Eyeball movement
   Eyeball movement is related to thought process and emotion. Eyeball movement is extracted out of image data having been taken by the camera 145.
(2E-1) Eyeball movement is grouped into saccades (high-speed leap action), smooth follow-up movement, convergence (both eyes simultaneously face inwardly), and so on.
(2E-2) A speed of eyeball movement is extracted out of image data having been taken by the camera 145.
(2E-3) Horizontal and vertical components in movement of each of eyeballs are extracted.
(2E-4) As a frequency of eyeball movement, a number of eyeball movements per a unit of time is extracted.
(3) Gesture
   Gesture acts as a body action for making communication without words, and is one of important non-verbal communication skills in language learning. Feature degrees relating to gesture are extracted out of image data taken by the camera 145, as follows.
(3A) Hand gesture
   Hand gesture plays an important role in emotional expression and communication. Hand gesture is extracted out of image data taken by the camera 145.
(3A-1) As a position of a hand, 3D coordinates of a hand and a relative position of a hand relative to a body part (for instance, a head, a shoulder and a body) are measured per a frame to thereby extract trajectory of a hand as time series data.
(3A-2) A distance and/or acceleration of hand movement per a unit of time are measured to thereby quantify a speed of hand movement.
(3A-3) A range of hand movement, complexity in trajectory of hand movement, and so on are analyzed to thereby extract a degree of hand movement.
(3B) Finger-pointing
   Finger-pointing is one of gestures to be used for indicating a particular direction or object. Finger-pointing is extracted out of image data taken by the camera 145.
(3B-1) As a finger-pointing direction, a directional vector of a fingertip, and horizontal and vertical angles of a fingertip are extracted (these measurements make it possible to identify a target to which a finger points).
(3B-2) As a frequency of finger-pointing, a number of finger-pointing per a unit of time is extracted.
(3B-3) As a period of time in which finger-pointing is kept done, an average period of time per one finger-pointing is extracted.
(3C) Palm direction
   A direction of palm indicates emotion or attitude. A palm direction is extracted out of image data taken by the camera 145.
(3C-1) In order to judge whether palm is upward or downward, an angle between a normal vector and a vertical axis of palm is extracted.
(3C-2) In order to judge whether palm directs frontward or rearward, an angle between a normal vector and a gaze direction is extracted.
(3C-3) In order to judge whether palm directs inwardly or outwardly of a body, an angle between a normal vector and a horizontal axis of palm is extracted.
(3D) Clapping hands
   Hand-clapping indicates pleasure or sympathy. Items mentioned below are extracted out of image data taken by the camera 145.
(3D-1) As a frequency of clapping hands, a number of hand-clapping per a unit of time is extracted.
(3D-2) As an intensity of clapping hands, an acceleration and a sound pressure level of hands in hand-clapping are extracted out of image data taken by the camera 145 and audio data taken by the microphone 144.
(3D-3) As a period of time in which hands are being clapped, an average period of time per one hand-clapping is extracted.
(3E) Shape of hands
   Shape of hands indicates emotion and attitude. Items mentioned below are extracted out of image data taken by the camera 145.
(3E-1) An opening degree of fingers and a distance between fingers are extracted as an opening/closing degree of hands to thereby quantify a degree of opening hands.
(3E-2) As how a user holds hands, action of hands such as clenched fist, lightly holding hands, and raising a finger is extracted.
(3E-3) As how a user joins hands, hand actions such as joining fingers and putting hands together are extracted.
(3F) Arm movement
   Arm movement complements for explanation and/or emotional expression. Items mentioned below are extracted out of image data taken by the camera 145.
(3F-1) As a position of an arm, 3D coordinates of an arm and a relative position of an arm relative to a body part (for instance, a head, a shoulder and a body) are measured per a frame to thereby extract trajectory of an arm as time series data.
(3F-2) As a speed of arm movement, an average movement distance of an arm and an acceleration of arm movement per a unit of time are measured to thereby quantify a speed of arm movement.
(3F-3) A range of arm movement, complexity in trajectory of arm movement, and so on are analyzed to thereby extract a degree of arm movement.
(3G) Elbow movement
   Elbow movement cooperates with arm movement to make gesture. Items mentioned below are extracted as a feature degree out of image data taken by the camara 145.
(3G-1) An elbow angle is extracted as elbow bending and stretching to thereby quantify a degree of elbow bending/stretching.
(3G-2) An angle of internal or external rotation of elbow joint is extracted to thereby quantify rotation movement of elbow.
(3H) Shoulder movement
   Shoulder movement indicates emotion and attitude. Items mentioned below are extracted as a feature degree out of image data taken by the camara 145.
(3H-1) Up and down movement of a shoulder, a vertical distance at which a scapula vertically moves is extracted.
(3H-2) Forward and rearward movement of a shoulder, a distance at which a scapula moves forwardly or rearwardly is extracted.
(3H-3) An angle of internal or external rotation of a scapula is extracted to thereby quantify rotation movement of a shoulder.
(4) Body language
   Body language is one of non-verbal communication indicating emotion, attitude, confidence, and so on through posture, behavior, body action and so on. Items relating to body language are extracted out of image data taken by the camera 145, as follows.
(4A) Posture (standing posture)
(4A-1) A distance between right and left foot, and a positional relation between right and left foot (for instance, parallel, V-shaped or reverse V-shaped) are extracted as a foot width.
(4A-2) With respect to a location of center of gravity, deviation of a location of center of gravity in a right-left direction and in a forward-rear direction is extracted.
(4A-3) As bending of a spine, a degree of S-shaped curvature of a spine, hunchback, arched back, and so on are extracted.
(4A-4) A degree of internal, external, upward and downward rotation of scapula is extracted to thereby identify a position of scapula.
(4A-5) An inclination angle of a head in a forward-rear direction and a left-right direction are extracted.
(4B) Posture (sitting posture)
(4B-1) As a degree of leaning on a backrest, an area in which a user's back makes contact with a backrest, and an inclination angle of a user's body are extracted.
(4B-2) As how a user crosses legs, whether a user crosses legs or not, and which is above among left or right leg are extracted.
(4B-3) Whether a user crosses arms or opens arms, whether a user puts arms aside a body, and whether a user puts arms on a table are extracted to identify a location of a user's arms.
(4B-4) As to on where a user puts hands, whether a user puts arms on knees, whether a user crosses hands, and whether a user holds hand are extracted.
(4C) Head movement (nodding)
(4C-1) An average number of nodding per a unit of time is extracted to measure a nodding speed.
(4C-2) Maximum and minimum angles of nodding are extracted to identify a nodding angle.
(4C-3) A number of nodding is extracted to identify a frequency of nodding.
(4D) Head movement (head-shaking)
(4D-1) An average number of head-shaking per a unit of time is extracted to identify a head-shaking speed.
(4D-2) Maximum and minimum angles of head-shaking are extracted to identify a head-shaking angle.
(4D-3) A number of head-shaking is extracted to identify a frequency of head-shaking.
(4E) Direction of body
(4E-1) An angle with which a user's front faces a conversational partner is extracted to identify a degree of face-to-face to a conversational partner.
(4E-2) An opening degree of a user's arms and legs, and a proportion in a period of time in which a user's front faces a conversational partner are extracted to identify an opening/closing degree of a body of a user.
(4F) Walking
(4F-1) An average distance per a step is extracted to identify a user's stride.
(4F-2) An average distance by which a user walks per a unit of time is extracted to identify a walking speed.
(4F-3) A degree of waving arms, left-right symmetry, a matching degree between arm-waving and a pace are extracted to identify arm-waving of a user.
(4G) Body inclination
(4G-1) Relative positions of a center of gravity in a body and a center of a sole, and an inclination angle of a core are extracted as a degree of forward/rearward inclination.
(4G-2) Displacement of a center of gravity of a body in a right/left direction, and an inclination angle of a core in a right/left direction are extracted to identify inclination in a right/left direction.
(5) Proxemics
   Proxemics is one of non-verbal information, indicating a distance and an angle in a interpersonal space, a spatial relationship such as occupation of a space, and so on. Items relating to proxemics are extracted as a feature degree out of image data taken by the camera 145 as mentioned below.
(5A) Personal space
   A relative distance from a fixed camera is extracted. Specifically, how a distance changes in a frame is analyzed.
(5B) Interpersonal angle
   An angle of a body relative to the camera 145 is extracted. Specifically, whether a user faces the camera 145 in front, and how the angle changes are observed.
(5C) Territoriality
   Territoriality including consciousness of spatial occupation and intensity of self-assertion is evaluated based on action, posture, and so on. Items mentioned below are extracted out of image data taken by the camera 145.
(5C-1) As spatial occupation, how fixed space is occupied is extracted.
(5C-2) As physical barriers, whether a user has physical barriers or not, and a degree of physical barriers such as crossing arms and crossing legs are extracted.
(6) Physical appearance
   Physical appearance is one of non-verbal information making a big impact to first impression and self-expression. In particular, physical appearance makes a big impact to communication in a business scene such as interview and presentation. Items mentioned below relating to physical appearance are extracted out of image data taken by the camera 145, and scored in accordance with evaluation criteria.
(6A) Clothing
(6A-1) With respect to a color and design, selection of a color and clothing design is used to evaluate appropriateness to impression and TPO (Time, Place, Occasion). A color and design are extracted.
(6A-2) Cleanliness of clothing and appropriateness of TPO are extracted.
(6B) Hairstyle
(6B-1) How selection of hairstyle and hair color makes an impact to impression and TPO of a user are extracted out of image data taken by the camera 145
(6B-2) Cleanliness and maintenance of hair is extracted.
(6C) Accessories
   Accessory type and its appropriateness in line with TPO are extracted out of image data taken by the camera 145.
(6D) Appearance
(6D-1) With respect to cleanliness and maintenance of skin, a maintenance degree of skin, nail and beard is extracted.
(6D-2) Cleanliness and a maintenance degree are extracted.
(6E) Posture
   Correctness of standing and sitting posture is evaluated as posture appropriateness. Specifically, whether a user is standing up straight, whether a user keeps natural posture, and so on are extracted.

As mentioned earlier, the thus extracted feature degrees are used as the input 220 for constructing and/or updating the trained evaluation model 210B. Hereinbelow is explained an example of how the evaluation model 210B is constructed and/or updated.

For instance, the evaluation model 210B is constructed as a multimodal deep-learning model and a large-scale language model (LLM) through supervised machine learning.

Herein, supervised machine learning indicates a methodology of training an evaluation model by using a pair of input data and correct-answer label. In this embodiment, moving-picture data of various languages are used as input, and a score to each of evaluation points in non-verbal communication skills is used as correct-answer label.

For instance, feature degrees mentioned below are used as input data.

### (a) feature degree of countenance (facial expression)

For instance, as a feature degree of countenance, an intensity of Action Unit (AU) in accordance with Facial Action Coding System (FACS), coordinates of landmarks (for instance, eyes, a nose, and a mouse) of a face, and a feature of a face shape, and so on are used.

### (b) Head posture

For instance, as a feature degree of head posture, three-dimensional rotation angle of a head (for instance, a pitch angle, a yaw angle, a roll angle, and so on), a moving speed of a head, a trajectory of a head movement, and so on are used.

### (c) Voice feature

For instance, a mel-frequency cepstral coefficient (MFCC), a linear predictive coding (LPC) coefficient, a formant frequency, a fundamental frequency (F0), and so on are used.

### (d) Prosody

For instance, time series data such as an audio pitch, a volume, a talking speed, a rhythm, and intonation is used as a feature degree of prosody.

A score (for instance, 1 to 5 in five stages) of each of evaluation points in non-verbal communication skills is used as the output data, for instance.

A number of nodes of output layers is equal to a number of kinds of non-verbal communication skills. Each of nodes indicates an evaluation score in each of corresponding evaluation points in non-verbal communication skills.

Deep-learning architecture such as Convolutional neural network (CNN), Long short-term memory (LSTM) and Transformer are used as learning algorithm.

Convolutional neural network (CNN) is suitable for extracting a feature degree out of image or time series data, and is particularly effective for recognizing countenance and/or gesture.

LSTM is one of recurrent neural networks suitable for dealing with time series data, and is particularly effective for recognizing time series patterns of voice or prosody.

Transformer includes a self-attention mechanism, and hence, is suitable to parallel processing. Transformer is particularly effective for integrally dealing with a plurality of non-verbal information.

As a loss function, mean square error (MSE) for dealing with regression and cross-entropy error for dealing with classification are used.

Mean square error (MSE) is used to evaluate a score (continuous value) in each of evaluation points in non-verbal communication skills. Cross-entropy error is used to judge whether particular non-verbal communication skill belongs to a particular category (for instance, a countenance of a user is a smile or not).

Adaptive Moment Estimation (Adam) is used as an optimization algorithm. In general, Adam is fast in learning convergence, and further, is easy in adjustment of hyper-parameters. Thus, Adam is selected as initial setup. If Adam cannot provide sufficient performance, stochastic gradient descent (SGD) or Root Mean Square Propagation (RMSprop) may be used.

As mentioned earlier, non-verbal communication skills cover a plurality of modality (information type) such as countenance, gaze, gesture, body action, hand gesture, and so on. The evaluation model 210B may be effectively constructed as a multi-modal deep-learning model.

Hereinbelow is explained a multi-modal deep-learning model.

A multi-modal deep-learning model receives below-mentioned feature degrees as the input 220 (see FIG. 3)

### (1) Information of face

A face area of a user is detected out of a user's moving picture stored in the sixth section 132F by means of an algorithm such as Haar Cascades, HOG+SVM, and MTCNN.

Then, 68, 128 or 468 landmarks in a user's face are detected by means of a library such as Dlib, OpenFace, and MediaPipe Face Mesh. The thus detected landmarks are used as a feature degree indicating how a shape and/or countenance of a user changes.

Fundamental emotion (joy, grief, anger, fear, surprise, antipathy, and so on) and countenance (confusion, contempt, interest, and so on) are detected by means of facial landmark information, texture information or pre-trained model (for instance, VGGFace and FaceNet).

In order to catch how emotion and/or countenance slightly changes, movement in each of facial muscles is expressed by Action Unit (AU), and an intensity of the movement is analyzed, based on Facial Action Coding System (FACS).

### (2) Information of gaze

A direction of gaze is estimated in accordance with landmark information and/or information indicative of a position of pupil. Furthermore, movement of gaze (saccade, smooth following motion, and so on), a period of time for gazing, alteration of a diameter of pupil, and so on are recorded as time series data to thereby extract a direction of gaze.

### (3) Audio information

Silent sections are deleted out of voice signals having been stored in the second section 132B by means of VAD (Voic Activity Deletion) algorithm to extract only voice sections.

Then, acoustic features such as MFCC (Mel-Frequency Cepstral Coefficient), LPC (Linear Predictive Coding), formant frequency, and fundamental frequency (F0) are extracted.

Furthermore, prosody features such as contour, intensity, duration of a pitch are extracted by using a tool such as prosodylab-aligner.

### (4) Physical information

Skeletal information of a user is extracted by means of a posture-estimating algorithm such as Openpose, AlphaPose and PoseNet to thereby get time series data about positions and angles of joints.

Then, a size, a speed, a direction and joint angles in user's body movement are calculated based on skeletal information.

### (5) Language information

A newly machine-trained large-scale language model (LLM) is used to analyze grammar, vocabulary and meaning in conversation.

Emotion and intention are analyzed based on speech content of a user, and further, context and intention of language are analyzed. Analysis results are used for evaluating non-verbal communication skills.

After feature degrees have been extracted out of each modality as mentioned above, pretreatment such as standardization and/or normalization is carried out for unifying a scale of feature degrees.

Specifically, redundant and/or noisy feature degrees are deleted to thereby enhance a learning efficiency and generalization performance of the multi-modal deep-learning model.

Furthermore, modality is integrated with the model.

For instance, relationship among feature degrees of different modalities is learned by means of attention mechanism, and then, importance of each modality is dynamically adjusted in accordance with situation. Then, feature degrees of different modalities are expressed as tensor by means of tensor fusion, and modalities are integrated with one another, for instance, by tensor decomposition.

By using self-attention mechanism and positional encoding, multi-modal data including time series data, spatial data, and so on can be effectively processed.

A score to each of non-verbal communication skills is calculated based on the thus integrated feature degrees (output 230).

Evaluation may be carried out, for instance, by means of a regression model, classification model or reinforcement learning.

For instance, as a regression model for estimating continuous values, linear regression, support vector regression (SVR), random forest regression and so on may be used. As a classification model, logistic regression, support vector machine (SVM), a decision tree, random forest may be used for classifying categories.

The system 500 for assisting a user to learn foreign languages provides the following advantages.

The system 500 makes it possible for a user to improve verbal skills and further non-verbal communication skills. Specifically, a user can self-learn exemplary non-verbal communication skills to be shown in a conversation to thereby enhance communication ability of a user.

As shown in the present embodiment, the system 500 may be set in the portable wireless communication device 100 such as a presently widely used cellular phone. In general, a user holds the portable wireless communication device 100 close by himself/herself, and hence, a user can learn foreign languages (particularly, non-verbal communication skills) anywhere and anytime at a user's own convenience.

### (Second Exemplary Embodiment)

A close relationship exists between content of a speech and non-verbal communication skills. Evaluation to non-verbal communication skills may be changed in dependence on content of a speech.

For instance, when joy or surprise is expressed, a smile or bright tone of voice is appropriately used, and when grief is expressed, calm tone of voice or modest gesture is required. On the contrary, if sad look or subdued voice is used in a scene of joy, or if a smile or a calm tone of voice is used in a scene of anger, it looks quite unnatural to a conversation partner.

Thus, the fourth program 131D (evaluation unit) auxiliary uses content of a user's speech as language data when the system 500 evaluates non-verbal communication skills of a user.

Language data includes the following points.
(A) Content of speech: grammar, vocabulary and pronunciation in speech are evaluated.
(B) Context: context and intention in speech are analyzed to appropriately evaluate non-verbal communication skills.
(C) Phrases: A frequency and appropriateness of particular phrase and expression are evaluated to thereby analyze relation with non-verbal communication skills.
(D) Smoothness of speech: How smoothly speech is made is evaluated to thereby analyze consistency of non-verbal communication skills.

The fourth program 131D analyzes each item in these language data (for instance, by extracting the above-mentioned feature degrees) to reflect the analysis results on evaluation of user's non-verbal communication skills.

For instance, when a user shows annoyed countenance or when a user turns his/her face away in conversation to be joyed, the fourth program 131D gives a low score to user's non-verbal communication skills (for instance, at an evaluation point of countenance or gesture), because the fourth program 131D judges that a user inappropriately behaves in spite of a scene to be joyed judging from content of speech.

It is possible to accurately evaluate user's non-verbal communication skills by considering not only image data taken by the camera 145, but also language data of a user having been recorded in the third section 132C.

The following points may be used as auxiliary language data.

### (1) Paralanguage

Paralanguage is non-verbal element included in voice and/or speech of a speaker, and plays an important role for expressing emotion, attitude, intention, and so on. Feature degrees relating to paralanguage, mentioned below, are extracted out of voice data, and are used as auxiliary data.
(1A) Tone of voice
   Tone of voice is important for expressing emotion and/or attitude. The following feature degrees relating to tone of voice are extracted out of voice data.
(1A-1) An average frequency in fundamental frequencies, standard deviation, range of variation, and so on are extracted out of voice data to thereby finally extract a pattern in which a pitch of voice varies.
(1A-2) A height of spectral centroid, a rate of high-frequency component, and so on are extracted out of voice data to thereby finally extract brightness and/or softness of voice.
(1A-3) A sound pressure level, audio energy, and so on are extracted out of voice data to thereby finally extract strength and/or force of voice.
(1A-4) A fundamental frequency and/or stability of volume are extracted out of voice data to finally extract tremor and/or instability of voice.
(1B) Pitch of voice
   Pitch of voice is important for expressing emotion and/or intention of speech. The following feature degrees relating to pitch of voice are extracted.
(1B-1) As a fundamental frequency, an average fundamental frequency, a maximum fundamental frequency, and a minimum fundamental frequency in conversation are extracted out of voice data to thereby extract overall features in pitch of voice.
(1B-2) As variation of a pitch, a range in which a pitch varies, a pattern in which a pitch varies (rises or lowers), a frequency of rising and lowering, and so on are extracted out of voice data to thereby extract voice intonation and emotional expression.
(1C) Volume of voice
   Volume of voice indicates a degree of easiness of listening and a degree of confidence. The following feature degrees relating to volume of voice are extracted out of voice data.
(1C-1) An average, a maximum, and a minimum of sound pressure level are extracted out of voice data to thereby extract overall feature of volume of voice.
(1C-2) Based on comparison with attenuation characteristics of voice and surrounding noise level, a distance at which voice reaches is estimated out of voice data.
(1D) Speaking speed
   Speaking speed is an important element reflecting easiness of listening and speaker's characters. The following feature degrees relating to speaking speed care extracted out of voice data.
(1D-1) An average number of words and an average number of syllables in conversation per a minute are counted out of voice data to thereby measure a speech speed.
(1D-2) A length of time of silence (pause) between speeches is measured out of voice data to thereby analyze an interval between speeches.
(1E) Intonation
   Intonation is important for expressing emotion and/or nuance of speech. The following feature degrees relating to intonation are extracted out of voice data.
(1E-1) Up and down of pitch, intonation at end of speech, and so on are extracted as intonation out of voice data to thereby extract rhythm and/or emotion of overall speech.
(1E-2) Stress positions and strength in a word/phrase and so on are extracted out of voice data to thereby extract cleanliness and easiness of listening of speech.
(1E-3) Rhythm pattern, regularity, tempo and so on are extracted out of voice data to thereby extract fluency and/or naturality of speech.
(1F) Intensity of voice
   Intensity of voice is important for expressing emphasis and/or emotion. The following feature degrees relating to intensity of voice are extracted out of voice data.
(1F-1) Words/phrases to be emphasized, a degree of emphasis variation, and so on are extracted out of voice data to thereby judge whether emphasis is effectively added.
(1F-2) A difference in voice intensity, and richness of intonation, and so on are extracted out of voice data to thereby extract expressiveness and easiness of listening.
(1G) Voic quality
   Voice quality is an important part influencing on easiness of listening and impression. The following feature degrees relating to voice quality are extracted out of voice data.
(1G-1) A rate of high frequency components, whether noise is small or not, and so on are extracted out of voice data to thereby extract clarity of voice and/or easiness of listening.
(1G-2) Richness of vocal cord vibration, a degree of resonance, and so on are extracted as sound (echo) of voice out of voice data to thereby extract depth and/or richness of voice.
(1G-3) A rate of low frequency components, whether noise is much or not, and so on are extracted out of voice data to thereby extract roughness of voice and/or difficulty of listening.
(1H) Clarity of speech
   Clarity of speech is an important part exerting influence on whether communication is smoothly made. The following feature degrees relating to clarity of speech are extracted out of voice data.
(1H-1) Accuracy of vowel and consonant, accuracy of intonation, and so on are extracted out of voice data to thereby evaluate clarity of speech.
(1H-2) Clarity of speech, fluency, and so on are extracted out of voice data to judge whether speech is fluent.
(11) Filler
   Filler means unconsciously uttered words such as "oh" and "ah". Much filler causes difficulty in listening. The following feature degrees relating to filler are extracted out of voice data.
(1I-1) As a frequency of using fillers, an average number of uttered fillers per a nuit of time is extracted out of voice data.
(1I-2) Filler types such as "ah", "yah", "yeah", and "oh" are classified out of voice data.
(2) Silence
   Silence means no speech situation. Silence is one of non-verbal information indicative of pause in conversation, thinking time, expression of emotion, and so on. The following feature degrees relating to silence are extracted out of voice data.
(2A) Intentional silence
(2A-1) A length of silence (pause) time between speeches, context before and after silence, and so on are extracted out of voice data to thereby judge whether pausing in conversation is appropriate or not.
(2A-2) A length of silence (for instance, shorter than 1 second, 1 to 2 second(s), 2 to 3 seconds, or longer than 3 seconds) is extracted out of voice data to thereby judge whether a length of silence is appropriate in accordance with situation.
(2A-3) An average number of silences per a unit of time is extracted out of voice data to count a frequency of silence.
(2B) Pause between conversations
(2B-1) A length of short pause in conversation is extracted out of voice data to thereby measure a length of pause.
(2B-2) A number of pauses per a unit of time is counted as a frequency of pause out of voice data.
(2B-3) For instance, context before and after pause is extracted out of voice data to thereby evaluate whether pause is natural or unnatural, or whether pause is unnaturally long/short.
(2C) Giving response
(2C-1) Timing at which a user gives a response to a conversation partner is extracted out of voice data.
(2C-2) Response types such as "yes", "yeah" and "I see" are classified out of voice data.
(2C-3) An average number of giving a response per a unit of time is counted as a frequency of giving a response out of voice data.
(3) Chronemics
   Chronemics is one of non-verbal information indicating attitude or behavior to time, and is quite different in dependence on culture and/or situation. The following feature degrees relating to chronemics are extracted out of voice data.
(3A) Reaction time
(3A-1) As a speed of response to inquiry, a period of time in which a user starts answering after having been asked questions is extracted out of voice data.
(3A-2) As a speed of response to action, a period of time in which a user starts action after having been instructed to take action is extracted out of voice data or image data.
(3B) Pace in conversation
(3B-1) A period of time after a first speaker started speaking till a second speaker starts speaking is extracted out of voice data as a duration of speaker changing.
(3B-2) A period of time in which a particular topic is talked, a frequency of changing topics, and so on are extracted out of voice data as a speed of topic development.
(3C) Pause between conversations
   Pause in conversation, a silent time between words, and so on are extracted out of voice data to thereby evaluate whether pause is natural or not.
(3D) Auditory information
(3D-1) Voic crispness, breathing, presence or absence of nasality, and so on are extracted out of voice data as voice quality.
(3D-2) A frequency, a volume and a type of laughter (for instance, laughing out loud, chuckle, and so on) are extracted as voice of laughter out of voice data.
(3D-3) With respect to throat clearing, a frequency and a timing of throat clearing are extracted out of voice data.

### (Third Exemplary Embodiment)

Evaluation is made to verbal skills and non-verbal communication skills of a user in the system 500 in accordance with the first exemplary system. It is possible to develop the first exemplary embodiment to make curriculum specialized for a user having been low-evaluated to compensate for the user's verbal skills and non-verbal communication skills.

A system for assisting a user to learn foreign languages in accordance with the third exemplary embodiment is designed to include a sixth program (not illustrated) in the application-storage section 131 of the external memory 130. The sixth program acts as a curriculum creator for creating a curriculum (learning plan) indicative of a future learning policy in dependence on evaluation results of a user.

After evaluation results of a user (steps S180 and S210 in FIG. 4) were made, the central processing unit 121 starts the sixth program.

The data-storage section 132 stores therein database (not illustrated) including solutions for each of defects pointed out in verbal skills and non-verbal communication skills. The sixth program finds a solution out of the database to deal with a defect(s) pointed out the evaluation, and makes curriculum including the thus found solution(s) as curriculum specialized for a user with respect to each of verbal skills and non-verbal communication skills.

Table 3 shows an example of the thus made curriculum (learning plan) of verbal skills.

**(Table 3)**

| Evaluation points | Message |
|---|---|
| Feed back | Your shadowing is overall good. There is room for improvement in pronunciation, intonation, and expression. Be confident. Particularly, your vocabulary is highly evaluated. |
| Specific improvements | ◆ Practice of pronunciation for particular alphabets (for instance "t" in "literature" and "culture", "z" in "organized") |
| | ◆ Practice to lower intonation at end of sentence |
| Continuous learning | ◆ Listening to English having different accents. |
| | ◆ Using a book, a site, and so on relating pronunciation as reference. |
| | ◆ Having an opportunity of discussing in English |
| Support message | Continue practice with the above-mentioned point in mind. You will be able to speak more fluent and natural English. Good luck ! |

Table 4 shows an example of the thus made curriculum (learning plan) of non-verbal communication skills.

**(Table 4)**

| Evaluation points | Message |
|---|---|
| Countenance | ◆ Countenance is a little stiff, and so, you are impressed of shortage in emotional expression. |
| | ◆ You need practice of enriching facial expressions, imaging content of conversation. |
| Gesture | ◆ Almost no gestures are found. It becomes easier to communicate to others by taking natural gesture. |
| | ◆ You are advised to take gestures highly relevant to keywords. |

These curriculums are displayed in the display 142.

The system in accordance with the second exemplary embodiment provides a curriculum(s) (learning plan) specialized to defects (weaknesses) of a user in both verbal skills and non-verbal communication skills. Since practice session focused on weaknesses of a user is also provided in the curriculum(s), a user can effectively overcome his/her weaknesses.

### (Fourth Exemplary Embodiment)

The system to assist a user to learn foreign languages in accordance with the fourth exemplary embodiment stores a seventh program (not illustrated) in the application-storage section 131 of the external memory 130. The seventh program has a function to newly make learning materials in accordance with the curriculum(s) made in the third exemplary embodiment to thereby ensure a user to self-learn foreign languages.

Namely, the seventh program provides newly made learning materials in line with weaknesses indicated in the evaluation results.

Learning materials include sentences (subtitle) and still images with voices.

The central processing unit 121 starts the seventh program to create images by means of image-creating technology. The thus created images are stored in the seventh section 132G, for instance.

Sentences are created by means of LLM (Large-scale Language Models) and RAG (Retrieval-Augmented Generation).

The system in accordance with the fourth exemplary embodiment ensures a user to newly have learning materials specialized to his/her weaknesses, ensuring enhancement in an efficiency of learning.

### (Fifth Exemplary Embodiment)

In the above-mentioned fourth exemplary embodiment, pictures (still images) are made as learning materials. It is also possible to create a moving picture in which sentences in learning materials are turned into voices. The thus created moving picture may be designed to display thereon a subtitle of the sentences as well as making voices.

The system for assisting a user to learn foreign languages in accordance with the fifth exemplary embodiment includes an eighth program (not illustrated) stored in the application-storage section 131. The eighth program has a function of newly creating a moving picture for a user to learn curriculum having been made in accordance with the third exemplary embodiment.

The central processing unit 121 starts the eighth program to create a moving picture in accordance with required conditions by means of moving picture creation technology and voice synthesis technology. The thus created moving picture is stored in the first section 132A.

For instance, the moving picture may be designed to be a conversation style moving picture in which a user and a character have a conversation.

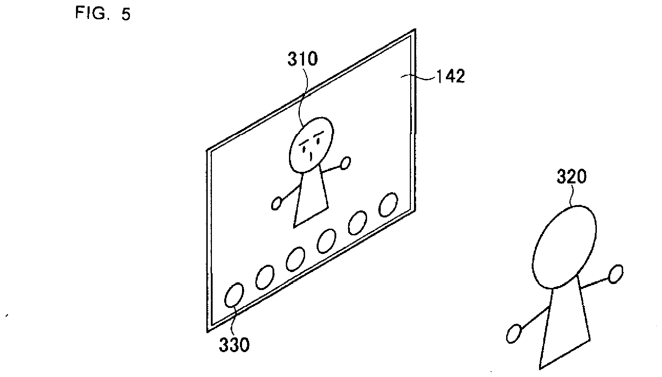

FIG. 5 is a conceptual illustration of the system in accordance with the fifth exemplary embodiment.

As illustrated in FIG. 5, a character 310 appears in a screen of the display 142. A user 320 faces the screen of the display 142 to have a conversation with the character 310.

The system in accordance with the fifth exemplary embodiment includes ninth, tenth and eleventh programs (all not illustrated) stores in the application-storage section 131. The ninth program has a function of making a response to voices uttered by the user 320, and turning the response to voices. The tenth program has a function of selecting appropriate non-verbal communication skill corresponding to behavior of the user 320. The eleventh program has a function of making a subtitle in line with instructions having been received from the central processing unit 121, and displaying the subtitle on a screen of the display 142.

The user 320 starts a conversation with the character 310. Voices of the user 320 are collected by the microphone 144, and are transmitted as voice data to the central processing unit 121. On receipt of the voice data, the central processing unit 121 starts the ninth program to thereby make a response to the voices having been uttered by the user 320, and then, turn the response into voice. The thus voiced response is output through the speaker 143 as voices uttered by the character 310. Thus, a dialogue is phonetically established between the character 310 in the display 142 and the user 320.

Furthermore, after the user 320 started a conversation, pictures of posture and action (non-verbal communication skills) of the user 320 are taken by the camera 145, and then, the pictures are transmitted as image data to the central processing unit 121.

On receipt of the image data, the central processing unit 121 starts the eighth program to thereby make a moving picture in which the character 310 behaves in line with the actions of the user 320. The thus made moving picture is displayed in the display 142. As mentioned above, a dialogue is visually established between the character 310 in the display 142 and the user 320.

On receipt of the image data, the central processing unit 121 starts both the ninth and tenth programs (a dialogue is phonetically and visually established between the character 310 and the user 320), and concurrently starts the fourth program 131D. Thus, exemplary non-verbal communication skills to be shown in a conversation, stored in the fourth section 132D is compared with the user's non-verbal communication skills having been shown in a conversation and having been recorded in the image data, by means of the trained second evaluation model 210B stored in the fifth section 132E.

Then, the central processing unit 121 makes evaluation results (see Table 2) to non-verbal communication skills of the users 320 as results of the comparison.

Then, the central processing unit 121 starts the eleventh program to thereby make a subtitle 330 reflecting the evaluation results, and displays the subtitle 330 on a screen of the display 142.

As mentioned so far, in the system in accordance with the present exemplary embodiment, when low-scored non-verbal communication skill of the user 320 appears while the user 320 is making a conversation with the character 310, the subtitle 330 indicating that the user 320 behaves with low-scored non-verbal communication skill is displayed in the display 142.

The user can instantaneously know that a defect of himself/herself in non-verbal communication skills is appearing, and hence, can soon handle the defect, ensuring enhancement of learning efficiency.

For instance, when no actions are found in a face of the user 320 during a conversation, a caution "your face is expressionless" is given in the subtitle 330.

Furthermore, an advice may be followed after the caution.

For instance, following a caution "your face is expressionless", an advice may be given such as "more smile".

Thus, the user 320 can know his/her defect(s), and further, understand how he/she deals with the defect(s) with the result that the user 320 can enhance his/her non-verbal communication skills.

It is possible to design the character 310 to speak content of the subtitle 33 in place of displaying the subtitle 330 or together with displaying the subtitle 330.

For instance, the system for assisting a user to learn foreign languages may be designed to further include a twelfth program (not illustrate) acting as mean for turning the subtitle 330 into voices.

The twelfth program provides voices turned from the subtitle in a screen of the display 142 as voices uttered by the character 310 in place of or together with the subtitle 330.

In general, human can understand something more rapidly through vision than through hearing. Accordingly, in comparison with a case in which only the subtitle 330 is used, the user 320 can easily and swiftly his/her defect(s) in non-verbal communication skills by directly indicating his/her defect(s) through words of a conversation partner, that is, the character 310. In particular, voices of the character 410 is useful in the case that the user 320 cannot afford to read the subtitle 330.

### (Sixth Exemplary Embodiment)

Non-verbal communication is sometimes culturally and/or religiously different from others unlike verbal communication. This is because the same non-verbal communication skill may have different meanings in dependence on cultural area.

For instance, a frequency of eye contacts and a period of time for continuing eye contact are different among cultural areas with respect to appropriate frequency and time.

The system in accordance with the sixth exemplary embodiment has an object to make appropriate evaluation to non-verbal communication skills of users resident in various cultural areas, considering cultural backgrounds of a user and its conversation partner.

To this end, the system in accordance with the sixth exemplary embodiment is designed to include both a database (not illustrated) storing therein information relating to cultural backgrounds collected from various countries and areas, and a thirteenth program (not illustrated).

The database is stored in the data-storage section 132, and the thirteenth program is stored in the application-storage section 131.

The thirteenth program reads cultural background data out of the database, and acts as means for taking cultural background of a user into consideration in evaluation to user's non-verbal communication skills made by the fourth program 131D.

The cultural background of a user is designated by the user himself/herself before starting learning, or determined through the use of algorithm for adapting the user's cultural background to the evaluation at real-time during the evaluation is being made.

For instance, it is supposed that keeping smile is considered to be good non-verbal communication skill in a particular cultural area A, but smile is considered to mock others in another cultural area B. Accordingly, when a user A belonging to the cultural area A has a conversation with a conversation partner B belonging to the cultural area B, the thirteenth program adds adjustment by which smile of the user A is lowly evaluated, to evaluation made by the fourth program 131D to non-verbal communication skills of the user A.

In a conversation-type moving picture shown in the fifth exemplary embodiment, the subtitle 330 giving the user 320 an advice that you should not show smile may be shown in the moving picture. As an alternative, the character 310 may be designed to speak content of the subtitle 330.

## Claims

1. A system (100) for assisting a user to learn foreign languages, **characterized by**:
a first device (145) for taking a picture of the user pronouncing in accordance with audio of a moving picture;
a first memory (132D) storing therein exemplary non-verbal communication skills to be demonstrated by a speaker during conversation;
a second memory (132F) storing therein a trained evaluation model for evaluating non-verbal communication skills of a speaker during conversation;
a second device (131D) for comparing the exemplary non-verbal communication skills stored in the first memory (132D) to non-verbal communication skills of the user having been acquired by the first device (145), by means of the trained evaluation model (210B) stored in the second memory (132E), to thereby evaluate non-verbal communication skills of the user; and
a third device (131E, 142) for displaying evaluation made by the second device (131D).

2. The system (100) as set forth in claim 1, wherein the second device (131D) evaluates non-verbal communication skills of the user with respect to at least one items selected among countenance, gaze, gesture, body action, proxemics, physical appearance, visual focus, auditory information and cultural background.

3. The system (100) as set forth in claim 2, wherein the second device (131D) extracts a feature degree indicating quantitatively a feature of each of the items, based on image data of the user having been acquired by the first device (145), and compares the thus extracted feature degree to the exemplary non-verbal communication skills stored in the first memory (132D).

4. The system (100) as set forth in claim 1, wherein the second device (131D) auxiliary uses conversation of the user as verbal data in evaluation of the non-verbal communication skills of the user.

5. The system (500) as set forth in claim 1, further including:
a first database storing therein cultural background data of various countries and regions; and
a fourth device for reading cultural background data of the user out of the first database, and taking the cultural background data of the user into consideration in evaluation of non-verbal communication skills of the user to be carried out by the second device (131D).

6. The system (100) as set forth in claim 1, wherein the trained evaluation model (210B) is made by machine learning so as to evaluate non-verbal communication skills of a speaker with the exemplary non-verbal communication skills stored in the first memory (132D) being used as criteria,
an input (220) to the trained evaluation model (210B) includes image data of non-verbal communication skills of the user during conversation, the image data being taken by the first device (145), and
an output (230) from the trained evaluation model (210B) is evaluation to the non-verbal communication skills of the user during conversation, the evaluation being made based on the exemplary non-verbal communication skills.

7. The system (500) as set forth in claim 1, further including a fifth device for making curriculum specialized for the user so as to compensate for the non-verbal communication skills of the user having been low-evaluated by the second device (131D).

8. The system (500) as set forth in claim 7, further including a sixth device for making learning materials in line with the curriculum made by the fifth device.

9. The system (100) as set forth in claim 8, wherein the learning materials include a moving picture in which characters (310) and the user (320) make conversation with each other.

10. The system (500) as set forth in claim 9, further including a seventh device for displaying a subtitle (330) in the moving picture,
wherein the seventh device, when non-verbal communication skills of the user having been low-evaluated by the second device (131D) appears in the conversation, displays at least a first subtitle among first and second subtitles, the first subtitle expressing low evaluation of the non-verbal communication skills of the user and a subtitle, the second subtitle including advice to the low-evaluated non-verbal communication skills of the user.

11. The system (500) as set forth in claim 10, further including an eighth device for turning the subtitle into audio,
wherein the eighth device plays the audio in the moving picture in place of or together with the subtitle (330).

12. A portable wireless communication device (100) including the system (500) as set forth in any one of claims 1 to 11.

13. A method of assisting a user to learn foreign languages, **characterized by** the seps of:
taking a picture (S140) of the user pronouncing in accordance with audio of a moving picture;
comparing exemplary non-verbal communication skills to non-verbal communication skills (S210) of the user having been acquired in the picture-taking step (S140), by means of a trained evaluation model (210B) used for evaluating non-verbal communication skills of a speaker in conversation, to thereby evaluate the non-verbal communication skills of the user, the exemplary non-verbal communication skills being read out of a memory (132D) storing therein exemplary non-verbal communication skills including exemplary countenance, gesture and so on to be demonstrated by a speaker in conversation; and
displaying evaluation (S220) made in the comparison step (S210).

14. A computer program adapted to perform the steps of the method defined in claim 13, when the program is run on a computer.

15. A portable wireless communication device (100) including a program for causing the portable wireless communication device (100) to carry out the method as set forth in claim 13.
